# EUROPEAN PATENT SPECIFICATION

(11) **EP 4 181 305 B1**
(45) Date of publication and mention of the grant of the patent: **08.01.2025**
(21) Application number: 21864611.5
(22) Date of filing: 31.08.2021
(51) Int. Cl.: H01M 50/449, H01M 50/431, H01M 50/446, H01M 10/058, H01M 50/44

(54) **SEPARATOR AND SECONDARY BATTERY INCLUDING THE SAME**
SEPARATOR UND SEKUNDÄRBATTERIE DAMIT
SÉPARATEUR ET BATTERIE SECONDAIRE LE COMPRENANT

(30) Priority: 04.09.2020 KR 20200112867
(43) Date of publication of application: 17.05.2023
(73) Proprietor: LG Energy Solution, Ltd., Seoul 07335 (KR)
(72) Inventor: KIM, Tae Gon, Daejeon 34122 (KR); KWAK, Min, Daejeon 34122 (KR); LEE, Sang Joon, Daejeon 34122 (KR); KIM, Jeong Gil, Daejeon 34122 (KR); KIM, Myeong Soo, Daejeon 34122 (KR)
(74) Representative: Hoffmann Eitle
(86) International application number: PCT/KR2021/011638
(87) International publication number: WO 2022/050651

(56) References cited:
- JP-B2- 6 439 293
- JP-B2- 6 439 293
- KR-A- 20150 061 680
- KR-A- 20160 116 565
- KR-A- 20190 052 249
- KR-A- 20190 117 387
- KR-A- 20190 117 387
- US-A1- 2019 123 327

## Description

### TECHNICAL FIELD

### Cross-reference to Related Applications

This application claims priority from Korean Patent Application No. 10-2020-0112867, filed on September 4, 2020.

### Technical Field

The present invention relates to a separator including a porous substrate and a conductive layer disposed on the porous substrate, wherein the conductive layer includes a carbon nanotube structure in which a plurality of single-walled carbon nanotube units are bonded to each other side by side, and the carbon nanotube structure has an average diameter of 2 nm to 500 nm, and a secondary battery including the same.

### BACKGROUND ART

Demand for batteries as an energy source has been significantly increased as technology development and demand with respect to mobile devices have recently increased, and a variety of research on batteries capable of meeting various needs has been carried out accordingly. Particularly, as a power source for such devices, research into lithium secondary batteries having excellent lifetime and cycle characteristics as well as high energy density has been actively conducted.

A lithium secondary battery denotes a battery in which an electrode assembly which includes a positive electrode including a positive electrode active material capable of intercalating/deintercalating the lithium ions, a negative electrode including a negative electrode active material capable of intercalating/deintercalating the lithium ions, and a separator disposed between the positive electrode and the negative electrode; and an electrolyte containing lithium ions are included.

Since movement of electrons must be smooth in the positive electrode and the negative electrode (hereinafter, referred to as an "electrode"), a conductive path of the electrode must be secured. For this purpose, the electrode uses a current collector having an active material layer disposed on a surface thereof, and the active material layer includes a conductive agent. Also, in order to improve the conductive path of the electrode, a technique for modifying the surface of the current collector or uniform dispersion of the conductive agent has been introduced. However, it is insufficient to improve the conductive path of the electrode only by a conventional method using the current collector or conductive agent.

Thus, in the present specification, a separator capable of improving the conductive path of the electrode and a secondary battery including the same are introduced.

JP 6 439293 B2 discloses separators.

### DISCLOSURE OF THE INVENTION

### TECHNICAL PROBLEM

An aspect of the present invention provides a separator capable of improving input/output characteristics of a battery by improving a conductive path of an electrode while maintaining a degree of diffusion of lithium ions of the separator.

Another aspect of the present invention provides a secondary battery including the separator.

### TECHNICAL SOLUTION

According to an aspect of the present invention, there is provided a separator including a porous substrate and a conductive layer disposed on the porous substrate, wherein the conductive layer includes a carbon nanotube structure in which a plurality of single-walled carbon nanotube units are bonded to each other side by side, and the carbon nanotube structure has an average diameter of 2 nm to 500 nm.

According to another aspect of the present invention, there is provided a secondary battery including the separator.

### ADVANTAGEOUS EFFECTS

Since a separator according to the present invention may improve a conductive path of an electrode in contact with a conductive layer by including the conductive layer including a carbon nanotube structure in which a plurality of single-walled carbon nanotube units are bonded to each other side by side, the separator may improve input/output characteristics of a battery by reducing batter resistance. Also, since the conductive layer has little effect on a pore structure of a porous substrate (or porous substrate and inorganic coating layer) in the separator, it may minimize a decrease in degree of diffusion of lithium ions in the separator while improving the conductive path.

### BRIEF DESCRIPTION OF THE DRAWINGS

FIG. 1 is scanning electron microscope (SEM) images of the separator of Comparative Example 1;
FIG. 2 is SEM images of the separator of Example 1;
FIG. 3 is SEM images of the separator of Example 2;
FIG. 4 is an SEM image of the separator of Comparative Example 3;
FIG. 5 is a transmission electron microscope (TEM) image of the carbon nanotube structure of Preparation Example 1;
FIG. 6 is a TEM image of the single-walled carbon nanotube unit of Preparation Example 2;
FIG. 7 is a schematic view of a battery according to an embodiment of the present invention;
FIG. 8 is a schematic view of a portion of a battery according to an embodiment of the present invention;
FIG. 9 is a schematic view of a portion of a battery according to an embodiment of the present invention;
FIG. 10 is a schematic view of a portion of a battery according to an embodiment of the present invention; and
FIG. 11 is a schematic view of a portion of a battery according to an embodiment of the present invention.

### MODE FOR CARRYING OUT THE INVENTION

It will be understood that words or terms used in the specification and claims shall not be interpreted as the meaning defined in commonly used dictionaries, and it will be further understood that the words or terms should be interpreted as having a meaning that is consistent with their meaning in the context of the relevant art and the technical idea of the invention, based on the principle that an inventor may properly define the meaning of the words or terms to best explain the invention.

The terms used in the present specification are used to merely describe exemplary embodiments, but are not intended to limit the invention. The terms of a singular form may include plural forms unless referred to the contrary.

It will be further understood that the terms "include," "comprise," or "have" in this specification specify the presence of stated features, numbers, steps, elements, or combinations thereof, but do not preclude the presence or addition of one or more other features, numbers, steps, elements, or combinations thereof.

In the present specification, the expression "specific surface area" is measured by a Brunauer-Emmett-Teller (BET) method, wherein, specifically, the specific surface area may be calculated from a nitrogen gas adsorption amount at a liquid nitrogen temperature (77K) using BELSORP-mini II by Bel Japan Inc.

The expression "average particle diameter (D₅₀)" in the present specification may be defined as a particle diameter at a cumulative volume of 50% in a particle size distribution curve. The average particle diameter (D₅₀), for example, may be measured by using a laser diffraction method. The laser diffraction method may generally measure a particle diameter ranging from a submicron level to a few mm and may obtain highly repeatable and high-resolution results.

In the present invention, the expression "single-walled carbon nanotube unit" denotes a unit in the form of a single-walled tube composed of carbon atoms, and the expression "multi-walled carbon nanotube unit" denotes a unit in the form of a tube with multiple walls composed of carbon atoms.

Hereinafter, the present invention will be described in detail.

### Separator

A separator according to the present invention includes a porous substrate and a conductive layer disposed on the porous substrate, wherein the conductive layer includes a carbon nanotube structure in which a plurality of single-walled carbon nanotube units are bonded to each other side by side, and the carbon nanotube structure may have an average diameter of 2 nm to 500 nm.

### 1) Porous Substrate

The porous substrate may be a porous polymer film substrate or a porous polymer nonwoven substrate.

The porous polymer film substrate may be a porous polymer film formed of polyolefin such as polyethylene, polypropylene, polybutylene, and polypentene, and such a polyolefin porous polymer film substrate, for example, exhibits a shutdown function at a temperature of 80°C to 130°C.

In this case, the polyolefin porous polymer film may be formed of any one of polyolefin-based polymers such as polyethylene, such as high-density polyethylene, linear low-density polyethylene, low-density polyethylene, and ultrahigh molecular weight polyethylene, polypropylene, polybutylene, and polypentene or may be formed of a polymer obtained by mixing two or more thereof.

Also, the porous polymer film substrate may be prepared by forming into a film shape using various polymers, such as polyester, in addition to polyolefin. Furthermore, the porous polymer film substrate may be formed in a structure in which two or more film layers are stacked, and each film layer may be formed of a polymer, such as the above-described polyolefin or polyester, alone or a polymer obtained by mixing two or more thereof.

Also, the porous polymer film substrate and the porous nonwoven substrate may be formed of any one of polyethyleneterephthalate, polybutyleneterephthalate, polyester, polyacetal, polyamide, polycarbonate, polyimide, polyetheretherketone, polyethersulfone, polyphenylene oxide, polyphenylene sulfide, and polyethylene naphthalene, in addition to the polyolefin as described above, or a polymer obtained by mixing these materials.

A thickness of the porous substrate is not particularly limited, but is specifically in a range of 1 um to 100 µm, for example, 5 um to 50 µm, and diameter and porosity of pores present in the porous substrate are also not particularly limited, but may be in a range of 0.01 um to 50 um and 10% to 95%, respectively.

### 2) Conductive Layer

The conductive layer may be disposed on the porous substrate. Specifically, the conductive layer may be disposed on one surface of the porous substrate, and more specifically, the conductive layer may be disposed only on one surface of the porous substrate.

The conductive layer may include a carbon nanotube structure, and specifically, the conductive layer may be formed of the carbon nanotube structure.

The carbon nanotube structure may include a plurality of single-walled carbon nanotube units. Specifically, the carbon nanotube structure may be a carbon nanotube structure in which 2 to 5,000 single-walled carbon nanotube units are bonded to each other side by side. More specifically, in consideration of durability of the conductive layer and a conductive network of an electrode, the carbon nanotube structure may be a carbon nanotube structure in which 2 to 4,500, preferably 50 to 4,500, and more preferably 1,000 to 4,500 single-walled carbon nanotube units are bonded to each other. In consideration of dispersibility of the carbon nanotube structure and the durability of the conductive layer, the carbon nanotube structure may be one in which 1,000 to 4,500 single-walled carbon nanotube units are arranged side by side and bonded to each other.

The single-walled carbon nanotube units may be arranged side by side and bonded in the carbon nanotube structure (bundle type cylindrical structure having flexibility in which the units are bonded such that long axes of the units are parallel to each other) to form the carbon nanotube structure. The carbon nanotube structures are interconnected in the conductive layer to have a network structure.

The carbon nanotube structure is different from a typical carbon nanotube. Specifically, the typical carbon nanotube denotes a carbon nanotube unit which is formed by dispersing bundle type or entangled type carbon nanotubes (a form in which single-walled carbon nanotube units or multi-walled carbon nanotube units are attached or entangled with each other) in a dispersion medium as much as possible (conductive agent dispersion). In this case, since the carbon nanotubes are fully dispersed in the typical conductive agent dispersion, the carbon nanotubes are present as the conductive agent dispersion in which single-stranded carbon nanotube units are dispersed. With respect to the typical conductive agent dispersion, since the carbon nanotube units are easily cut by an excessive dispersion process, the carbon nanotube units have lengths shorter than their respective initial lengths. In this case, if the separator is coated by using the conductive agent dispersion, since the carbon nanotube units having a small average diameter are located in the pores in the separator, a volume of the pores on a surface and inside of the separator is excessively reduced, and thus, lithium ion diffusion in the separator is not smooth. Also, there is a problem in that the carbon nanotube units are connected to each other through the pores in the separator to cause a local short circuit between a positive electrode and a negative electrode which are present with the separator disposed therebetween. Furthermore, with respect to the multi-walled carbon nanotube units, structural defects are high due to a mechanism in which nodes grow (the units are not smooth and linear, but the nodes are present due to defects generated during the growth process). Thus, the multi-walled carbon nanotube units are more easily cut in the dispersion process, and the short-cut multi-walled carbon nanotube units may be easily aggregated by π-π stacking caused by carbon of the unit. Accordingly, it is more difficult for the multi-walled carbon nanotube units to be more uniformly dispersed in the conductive layer of the separator.

Alternatively, with respect to the carbon nanotube structure included in the conductive layer of the separator of the present invention, the carbon nanotube structure is in the form of a rope in which a plurality of single-walled carbon nanotube units maintaining relatively high crystallinity without structural defects are arranged side by side and bonded together. Since the carbon nanotube structure has a large average diameter, it is not easily disposed inside the pores of the porous substrate (or porous substrate and inorganic coating layer) of the separator, and thus, a pore structure may be maintained. Accordingly, since a decrease in lithium ion diffusion in the separator may be minimized, input/output characteristics of a battery may be maintained. Also, since the carbon nanotube structure forms a network structure in the conductive layer, the conductive layer may act as a kind of current collector with respect to the electrode in contact with the conductive layer due to the network structure. Specifically, since the conductive layer may be in contact with not only the electrode but also a current applying part (e.g., lower can in a coin cell, electrode tab in a typical full-cell) connected to the electrode, a current may flow along the conductive layer in addition to the current collector in the electrode when the current is applied from the outside. Thus, since the current may uniformly flow over an entire surface of the electrode along the conductive layer, resistance of the battery may be significantly improved and the input/output characteristics and life characteristics of the battery may be improved. Particularly, due to large length and large diameter of the carbon nanotube structure, since the conductive network by the carbon nanotube structure may be formed relatively uniformly and strongly, the above-described effect of improving a conductive path is better than a case of using a typical carbon nanotube unit.

In the carbon nanotube structure, the single-walled carbon nanotube unit may have an average diameter of 0.5 nm to 10 nm, for example, 1 nm to 9 nm. When the average diameter is satisfied, the effect of improving a conductive path in the electrode through the conductive layer may be maximized even by using a small amount of the carbon nanotube structure. The average diameter corresponds to an average value of diameters of the top 100 single-walled carbon nanotube units with a larger diameter and the bottom 100 single-walled carbon nanotube units with a smaller diameter when a surface of the prepared separator is observed by a transmission electron microscope (TEM).

In the carbon nanotube structure, the single-walled carbon nanotube unit may have an average length of 1 um to 100 µm, for example, 5 um to 50 um. When the average length is satisfied, since a conductive path may be formed on the electrode through the conductive layer and a unique network structure may be formed in the conductive layer, conductivity in the electrode may be maximized even with a very small amount of the carbon nanotube structure. The average length corresponds to an average value of lengths of the top 100 single-walled carbon nanotube units with a larger length and the bottom 100 single-walled carbon nanotube units with a sma ller length when the surface of the prepared separator is observed by a TEM.

The single-walled carbon nanotube unit may have a specific surface area of 500 m²/g to 1,000 m²/g, for example, 600 m²/g to 800 m²/g. When the specific surface area satisfies the above range, since the conductive path in the electrode may be smoothly secured by the wide specific surface area, the conductivity in the electrode may be maximized even with a very small amount of the carbon nanotube structure. The specific surface area of the single-walled carbon nanotube unit may specifically be calculated from a nitrogen gas adsorption amount at a liquid nitrogen temperature (77K) using BELSORP-mini II by Bel Japan Inc.

The carbon nanotube structure may have an average diameter of 2 nm to 500 nm, particularly 10 nm to 500 nm, and more particularly 100 nm to 500 nm. In a case in which the average diameter is less than 2 nm, the carbon nanotube structure is easily broken during the dispersion process so that the conductive network may not be formed smoothly, the carbon nanotube structure may block the pore structure of the porous substrate (or porous substrate and inorganic coating layer) to degrade performance of the battery, and an internal short circuit may occur because a conductive network may be formed in a path through the separator. In a case in which the average diameter is greater than 500 nm, the pore structure of the surface of the porous substrate (or porous substrate and inorganic coating layer) may be clogged due to the excessively large diameter to degrade the performance of the battery, and, since the number of strands forming the conductive network is small when using the same amount of the carbon nanotube structure, the desired effect may not be smoothly achieved. The average diameter of the carbon nanotube structure corresponds to an average value of diameters of the top 100 carbon nanotube structures with larger diameters and the bottom 100 carbon nanotube structures with smaller diameters when the surface of the prepared separator is observed by a scanning electron microscope (SEM).

The carbon nanotube structure may have an average length of 1 um to 500 um, particularly 5 um to 300 µm, and more particularly 10 um to 100 um. When the average length satisfies the above range, since the conductive network is effectively formed and the current in the electrode may be uniformly transmitted, the battery resistance may be reduced and overall battery performance, such as the input/output characteristics and the life characteristics of the battery, may be improved. The average length of the carbon nanotube structure corresponds to an average value of lengths of the top 100 carbon nanotube structures with larger lengths and lengths of the bottom 100 carbon nanotube structures with smaller lengths when the surface of the prepared separator is observed by an SEM.

In some cases, the single-walled carbon nanotube unit may be surface-treated through an oxidation treatment or nitridation treatment to improve affinity with a dispersant.

The carbon nanotube structure may be included in an amount of 0.01 part by weight to 20 parts by weight based on 100 parts by weight of the porous substrate, and may specifically be included in an amount of 0.01 part by weight to 10 parts by weight. When the amount of the carbon nanotube structure satisfies the above range, since the pore structure of the porous substrate may be exposed to the surface, the surface of the separator may have a porous structure. Also, since the conductive layer may act as a kind of current collector on the surface of the electrode in contact with the separator, the resistance of the battery may be reduced and the input/output characteristics of the battery may be improved.

Since the carbon nanotube structure is a highly crystalline carbon-based material, high-temperature stability and chemical resistance are high. Thus, even if the temperature in the battery is rapidly increased, the carbon nanotube structure may maintain a solid network structure.

The conductive layer may have a thickness of 10 nm to 2,000 nm, particularly 50 nm to 2,000 nm, and more particularly 100 nm to 1,000 nm. When the thickness of the conductive layer satisfies the above range, since the pore structure of the porous substrate may be exposed to the surface, the surface of the separator may have a porous structure. Also, since the conductive layer may act as a kind of current collector on the surface of the electrode in contact with the separator, the resistance of the battery may be reduced and the input/output characteristics of the battery may be improved. Particularly, in order to obtain the above-described effect while maintaining high energy density of the battery, the thickness of the conductive layer is most preferably in a range of 100 nm to 1,000 nm. The thickness may be measured by checking a cross section of the separator through an SEM.

The conductive layer may have a surface resistance of 5×10⁻¹ Ω/□ to 5×10⁴ Ω/□, for example, 5×10 Ω/□ to 5×10⁴ Ω/□. Since the carbon nanotube structure is used, the above range may be derived by forming a long and robust conductive network in the form of a rope and high electrical conductivity of the carbon nanotube structure. When the surface resistance of the conductive layer satisfies the above range, since the conductive layer may act as a kind of current collector on the surface of the electrode in contact with the separator while the surface of the separator maintains a porous structure, the resistance of the battery may be reduced and the input/output characteristics of the battery may be improved.

The conductive layer may further include an additive covering at least a portion of the surface of the carbon nanotube structure. The additive may play a role in appropriately dispersing the bundle type or entangled type carbon nanotubes in the formation of the carbon nanotube structure. Since the additive is present while covering the at least a portion of the surface of the carbon nanotube structure, the conductive layer may not be easily exfoliated from the separator and may be strongly bonded to the porous substrate.

The additives may be at least one selected from the group consisting of polyvinylidene fluoride, polyvinylidene fluoride-hexafluoropropylene copolymer (PVdF-co-HFP), polyvinyl alcohol, polyacrylonitrile, polyvinylpyrrolidone, tetrafluoroethylene, polyethylene, polypropylene, hydrogenated nitrile butadiene rubber, polystyrene, pyrene butyric acid, pyrene sulfonic acid, tannic acid, pyrene methylamine, sodium dodecyl sulfate, carboxymethyl cellulose, styrene butadiene rubber, and fluoro rubber, and may specifically be a carboxymethyl cellulose.

### 3) Inorganic Coating Layer

In some cases, the separator may further include the inorganic coating layer. The inorganic coating layer may be disposed between the porous substrate and the conductive layer. In this case, even if heat generation/ignition occurs or the temperature rises rapidly for various reasons in the battery, since the inorganic coating layer maintains a shape of the separator to prevent a short circuit between the positive electrode and the negative electrode, the inorganic coating layer may improve safety of the battery.

The inorganic coating layer may include inorganic particles. The inorganic particle is not particularly limited as long as it does not reduce conductivity and does not cause an oxidation and/or reduction reaction, that is, an electrochemical reaction, with a positive electrode or negative electrode collector in an operating voltage range

(e.g., 0 V - 5 V based on Li/Li⁺) of the battery, and, for example, may be at least one inorganic material selected from the group consisting of Al₂O₃, BaTiO₃, CaO, CeO₂, NiO, MgO, SiO₂, SnO₂, SrTiO₃, TiO₂, Y₂O₃, ZnO, ZrO₂, Pb(Zr,Ti)O₃ (PZT), Pb₁₋ₓLaₓZr_{1-y}TiyO₃ (PLZT), Pb (Mg_{1/3}Nb_{2/3})O₃-PbTiO₃ (PMN-PT), and hafnia (HfO₂).

The inorganic coating layer may further include a binder. The binder plays a role in increasing a binding force between the inorganic particles. The binder may include polyvinylidene fluoride-co-trichloroethylene, polymethylmethacrylate, polyethylhexyl acrylate, polybutylacrylate, polyacrylonitrile, polyvinylpyrrolidone, polyvinylacetate, polyethylene-co-vinyl acetate, polyethylene oxide, polyarylate, cellulose acetate, cellulose acetate butyrate, cellulose acetate propionate, cyanoethylpullulan, cyanoethylpolyvinylalcohol, cyanoethylcellulose, cyanoethylsucrose, pullulan, and carboxylmethyl cellulose, but is not limited thereto.

Since the carbon nanotube structure is a highly crystalline carbon-based material, high-temperature stability and chemical resistance are high. Thus, even if the temperature in the battery is rapidly increased, the carbon nanotube structure may maintain a solid network structure. Also, in a case in which the inorganic coating layer and the carbon nanotube structure are bonded, since the inorganic coating layer and the carbon nanotube structure maintain the shape of the separator to prevent the short circuit between the positive electrode and the negative electrode even if heat generation/ignition occurs or the temperature rises rapidly for various reasons in the battery, the safety of the battery may be further improved.

Air permeability of the separator may be in a range of 50 s/100cc to 500 s/100cc, particularly 100 s/100cc to 300 s/100cc, and more particularly 150 s/100cc to 250 s/100cc. The expression "air permeability" means time taken for 100 cc of air to permeate through the separator. Satisfying the air permeability means that the pore structure of the separator is effectively established, and, in other words, means that the pore structure of the separator may be maintained even if the conductive layer has been formed. When the air permeability range of the separator is satisfied, since the diffusion of lithium ions may be facilitated, the input/output characteristics of the battery may be improved.

### Method of Preparing Separator

Next, a method of preparing the separator of the present invention will be described.

The method of preparing the separator of the present invention includes the steps of: preparing a carbon nanotube structure; and disposing the carbon nanotube structure on a porous substrate, wherein the carbon nanotube structure includes a structure in which a plurality of single-walled carbon nanotube units are bonded to each other side by side, and the carbon nanotube structure may have an average diameter of 2 nm to 500 nm. The porous substrate and the carbon nanotube structure may be the same as the porous substrate and the carbon nanotube structure which have been described in the separator of the above-described embodiment.

### 1) Preparation of Carbon Nanotube Structure

The preparation of the carbon nanotube structure may include the steps of: preparing a mixed solution including a dispersion medium, a dispersant, and bundle type single-walled carbon nanotubes (bonded body or aggregate of single-walled carbon nanotube units) (S1-1); and forming a carbon nanotube structure, in which a plurality of single-walled carbon nanotube units are bonded side by side, by dispersing the bundle type single-walled carbon nanotubes by applying a shear force to the mixed solution (S1-2).

In step S1-1, the mixed solution may be prepared by adding bundle type single-walled carbon nanotubes and a dispersant to a dispersion medium. The bundle type single-walled carbon nanotubes are present in the form of a bundle in which the above-described single-walled carbon nanotube units are bonded, wherein the bundle type carbon nanotube includes usually 2 or more, substantially 500 or more, for example, 5,000 or more single-walled carbon nanotube units.

The bundle type single-walled carbon nanotube may have a specific surface area of 500 m²/g to 1,000 m²/g, for example, 600 m²/g to 800 m²/g. When the specific surface area satisfies the above range, since the conductive path in the electrode may be smoothly secured by the wide specific surface area, the conductivity in the electrode may be maximized even with a very small amount of the conductive agent.

The bundle type single-walled carbon nanotubes may be included in an amount of 0.1 wt% to 1.0 wt%, for example, 0.2 wt% to 0.5 wt% in the mixed solution. When the amount of the bundle type single-walled carbon nanotubes satisfies the above range, since the bundle type single-walled carbon nanotubes are dispersed in an appropriate level, a carbon nanotube structure may be formed at an appropriate level and dispersion stability may be improved.

The dispersion medium, for example, may include water, an amide-based polar organic solvent such as dimethylformamide (DMF), diethylformamide, dimethylacetamide (DMAc), and N-methylpyrrolidone (NMP); alcohols such as methanol, ethanol, 1-propanol, 2-propanol (isopropyl alcohol), 1-butanol (n-butanol), 2-methyl-1-propanol (isobutanol), 2-butanol (sec-butanol), 1-methyl-2-propanol (tert-butanol), pentanol, hexanol, heptanol, or octanol; glycols such as ethylene glycol, diethylene glycol, triethylene glycol, propylene glycol, 1,3-propanediol, 1,3-butanediol, 1,5-pentanediol, or hexylene glycol; polyhydric alcohols such as glycerin, trimethylolpropane, pentaerythritol, or sorbitol; glycol ethers such as ethylene glycol monomethyl ether, diethylene glycol monomethyl ether, triethylene glycol monomethyl ether, tetraethylene glycol monomethyl ether, ethylene glycol monoethyl ether, diethylene glycol monoethyl ether, triethylene glycol monoethyl ether, tetraethylene glycol monoethyl ether, ethylene glycol monobutyl ether, diethylene glycol monobutyl ether, triethylene glycol monobutyl ether, or tetraethylene glycol monobutyl ether; ketones such as acetone, methyl ethyl ketone, methyl propyl ketone, or cyclopentanone; and esters such as ethyl acetate, γ- butyrolactone, and ε-propiolactone, and any one thereof or a mixture of two or more thereof may be used, but the present invention is not limited thereto. Specifically, the dispersion medium may be water.

The dispersant may include at least one selected from a hydrogenated nitrile butadiene rubber, polyvinylidene fluoride, and carboxymethyl cellulose, and may specifically be carboxymethyl cellulose. The dispersant may correspond to the additive of the above-described embodiment.

In the conductive agent dispersion, a weight ratio of the bundle type carbon nanotubes to the dispersant may be in a range of 1:0.1 to 1:10, for example, 1:1 to 1:10. In a case in which the weight ratio satisfies the above range, since the bundle type single-walled carbon nanotubes are dispersed in an appropriate level, a carbon nanotube structure may be formed at an appropriate level and the dispersion stability may be improved.

A solid content in the mixed solution may be in a range of 0.1 wt% to 20 wt%, for example, 1 wt% to 10 wt%. In a case in which the solid content satisfies the above range, since the bundle type single-walled carbon nanotubes are dispersed in an appropriate level, a carbon nanotube structure may be formed at an appropriate level and the dispersion stability may be improved. Also, an electrode slurry may have viscosity and elasticity suitable for an electrode preparation process, and it also contributes to increase the solid content of the electrode slurry.

In step S1-2, a process of dispersing the bundle type carbon nanotubes in the mixed solution may be performed by using a mixing device such as a homogenizer, a bead mill, a ball mill, a basket mill, an attrition mill, a universal stirrer, a clear mixer, a spike mill, a TK mixer, or sonication equipment. Among them, a bead-mill method is preferred in that it may precisely control the diameter of the carbon nanotube structure, may achieve a uniform distribution of the carbon nanotube structure, and may have advantages in terms of cost.

The bead-mill method may be as follows. The mixed solution may be put in a vessel containing beads, and the vessel may be rotated to disperse the bundle type single-walled carbon nanotubes.

In this case, conditions under which the bead-mill method is performed are as follows.

The beads may have an average diameter of 0.5 mm to 1.5 mm, for example, 0.5 mm to 1.0 mm. In a case in which the average diameter satisfies the above range, the diameter of the carbon nanotube structure may be properly controlled without breaking the carbon nanotube structure during a dispersion process, and a dispersion solution with a uniform composition may be prepared.

A rotational speed of the vessel may be in a range of 500 RPM to 10,000 RPM, for example, 2,000 RPM to 6,000 RPM. In a case in which the rotational speed satisfies the above range, the diameter of the carbon nanotube structure may be properly controlled without breaking the carbon nanotube structure during the dispersion process, and a dispersion solution with a uniform composition may be prepared.

The time during which the bead mill is performed may be in a range of 0.5 hours to 2 hours, particularly 0.5 hours to 1.5 hours, and more particularly 0.8 hours to 1 hour. In a case in which the time satisfies the above range, the diameter of the carbon nanotube structure may be properly controlled without breaking the carbon nanotube structure during the dispersion process, and a dispersion solution with a uniform composition may be prepared. The performance time of the bead mill means total time during which the bead mill is used, and, thus, for example, if the bead mill is performed several times, the performance time means total time required for performing the bead mill several times.

The above bead mill conditions are for dispersing the bundle type single-walled carbon nanotubes at an appropriate level, and specifically exclude the case where the bundle type single-walled carbon nanotubes are completely dispersed into single-stranded single-walled carbon nanotubes. That is, the above bead mill conditions are for forming the carbon nanotube structure in which a plurality of single-walled carbon nanotube units are bonded together side by side in the conductive agent dispersion prepared by appropriately dispersing the bundle type single-walled carbon nanotubes. This may be achieved only when a composition of the mixed solution and dispersion process (e.g., bead mill process) conditions are strictly controlled.

A carbon nanotube structure dispersion may be formed through the above process.

### (2) Step of Disposing the Carbon Nanotube Structure on the Porous Substrate

The carbon nanotube structure may be disposed on the porous substrate by applying the carbon nanotube structure dispersion on the porous substrate and solidifying the applied carbon nanotube structure dispersion. The porous substrate may include or may not include the above-described inorganic coating layer, but it is preferable to include the inorganic coating layer in order to improve safety. A conventional method, such as a Mayer bar, a die coater, a reverse roll coater, and a gravure coater, may be used to apply the carbon nanotube structure dispersion.

### Secondary Battery

A secondary battery according to another embodiment of the present invention may include an electrode and the separator of the above-described embodiment.

The electrode may include a positive electrode and a negative electrode.

The electrode may include an electrode active material layer. The electrode may further include a current collector, and, in this case, the electrode active material layer may be disposed on one surface or both surfaces of the current collector.

The current collector is not particularly limited as long as it has conductivity without causing adverse chemical changes in the battery, and, for example, copper, stainless steel, aluminum, nickel, titanium, alloys thereof, these materials that are surface-treated with one of carbon, nickel, titanium, silver, or the like, or fired carbon may be used.

The current collector may typically have a thickness of 3 um to 500 µm, and microscopic irregularities may be formed on the surface of the collector to improve the adhesion of the electrode active material. Also, the electrode collector, for example, may be used in various shapes such as that of a film, a sheet, a foil, a net, a porous body, a foam body, a non-woven fabric body, and the like.

The electrode active material layer may include an electrode active material and a conductive agent.

The electrode active material may be a positive electrode active material or negative electrode active material commonly used in the art, but types thereof are not particularly limited.

For example, as the positive electrode active material, a lithium oxide including lithium and at least one metal such as cobalt, manganese, nickel, or aluminum may be used. Specifically, the lithium oxide may include lithium-manganese-based oxide (e.g., LiMnO₂, LiMn₂O, etc.), lithium-cobalt-based oxide (e.g., LiCoO₂, etc.), lithium-nickel-based oxide (e.g., LiNiO₂, etc.), lithium-nickel-manganese-based oxide (e.g., LiNi_{1-Y1}Mn_{Y1}O₂ (where 0<Y1<1), LiMn_{2-Z1}Ni_{z1}O₄ (where 0<Z1<2), etc.), lithium-nickel-cobalt-based oxide (e.g., LiNi_{1-Y2}Co_{Y2}O₂ (where 0<Y2<1), lithium-manganese-cobalt-based oxide (e.g., LiCo_{1-Y3}Mn_{Y3}O₂ (where 0<Y3<1), LiMn_{2-Z2}Co_{z2}O₄ (where 0<Z2<2), etc.), lithium-nickel-cobalt-manganese-based oxide (e.g., Li(Ni_{P1}Co_{Q1}Mn_{R1})O₂ (where 0<P1<1, 0<Q1<1, 0<R1<1, and P1+Q1+R1=1) or Li(Ni_{P2}Co_{Q2}Mn_{R2})O₄ (where 0<P2<2, 0<Q2<2, 0<R2<2, and P2+Q2+R2=2), etc.), or lithium-nickel-cobalt-manganese-transition metal (M) oxide (e.g., Li(Ni_{P3}Co_{Q3}Mn_{R3}M¹_{S})O₂ (where M¹ is selected from the group consisting of aluminum (Al), copper (Cu), iron (Fe), vanadium (V), chromium (Cr), titanium (Ti), zirconium (Zr), zinc (Zn), tantalum (Ta), niobium (Nb), magnesium (Mg), boron (B), tungsten (W), and molybdenum (Mo), and P3, Q3, R3, and S are atomic fractions of each independent elements, wherein 0<P3<1, 0<Q3<1, 0<R3<1, 0<S<1, and P3+Q3+R3+S=1), etc.), and any one thereof or a compound of two or more thereof may be included.

The negative electrode active material, for example, may include a carbonaceous material such as artificial graphite, natural graphite, graphitized carbon fibers, and amorphous carbon; a metallic compound alloyable with lithium such as silicon (Si), aluminum (Al), tin (Sn), lead (Pb), zinc (Zn), bismuth (Bi), indium (In), magnesium (Mg), gallium (Ga), cadmium (Cd), a Si alloy, a Sn alloy, or an Al alloy; a metal oxide which may be doped and undoped with lithium such as SiOᵥ(0<v<2), SnO₂, vanadium oxide, and lithium vanadium oxide; or a composite including the metallic compound and the carbonaceous material such as a Si-C composite or a Sn-C composite, and any one thereof or a mixture of two or more thereof may be used. Also, a metallic lithium thin film may be used as the negative electrode active material. Furthermore, both low crystalline carbon and high crystalline carbon may be used as the carbon material.

The electrode active material may be included in an amount of 70 wt% to 99.5 wt%, for example, 80 wt% to 99 wt% based on a total weight of the electrode active material layer. When the amount of the electrode active material satisfies the above range, excellent energy density, electrode adhesion, and electrical conductivity may be achieved.

The conductive agent is not particularly limited as long as it has conductivity without causing adverse chemical changes in the battery, and, conductive materials, for example, graphite such as natural graphite and artificial graphite; carbon black such as acetylene black, Ketjen black, channel black, furnace black, lamp black, and thermal black; conductive fibers such as carbon fibers or metal fibers; conductive tubes such as carbon nanotubes; metal powder such as fluorocarbon powder, aluminum powder, and nickel powder; conductive whiskers such as zinc oxide whiskers and potassium titanate whiskers; conductive metal oxide such as titanium oxide; or polyphenylene derivatives, may be used.

The electrode may further include a binder. The binder may include at least one selected from the group consisting of a polyvinylidene fluoride-hexafluoropropylene copolymer (PVDF-co-HFP), polyvinylidene fluoride, polyacrylonitrile, polymethylmethacrylate, polyvinyl alcohol, carboxymethyl cellulose (CMC), starch, hydroxypropyl cellulose, regenerated cellulose, polyvinylpyrrolidone, tetrafluoroethylene, polyethylene, polypropylene, polyacrylate, an ethylene-propylene-diene monomer (EPDM), a sulfonated EPDM, a styrene-butadiene rubber (SBR), a fluorine rubber, poly acrylic acid, and a material having hydrogen thereof substituted with lithium (Li), sodium (Na), or calcium (Ca), or may include various copolymers thereof.

The electrode is connected to a current applying part.

Specifically, in a case in which the secondary battery is a coin cell, an external current is applied to the electrode in contact with a lower can through the lower can, and, in this case, the lower can corresponds to the current applying part. In a case in which the secondary battery is a mono-cell (or a pouch type or cylindrical type battery having more stacks than the mono-cell) rather than the coin cell, an external current is applied to the electrode through an electrode tab, and, in this case, the electrode tab corresponds to the current applying part. In a case in which the electrode is a positive electrode in the mono-cell, an end (an end region of a portion in which a positive electrode active material layer is not formed (uncoated portion)) of a positive electrode collector in the positive electrode may correspond to the current applying part.

The separator may be disposed between the positive electrode and the negative electrode. The positive electrode includes a positive electrode collector and a positive electrode active material layer, and the negative electrode includes a negative electrode collector and a negative electrode active material layer. The positive electrode collector and the negative electrode collector include uncoated portions in which the positive electrode active material layer and the negative electrode active material layer are not disposed (not overlapped with the positive electrode active material layer), respectively. When explaining a case in which the positive electrode is in contact with the conductive layer of the separator (in some cases, the negative electrode, not the positive electrode, may be in contact with the conductive layer of the separator), the conductive layer of the separator may be in contact with the uncoated portion of the positive electrode collector and the current applying part (corresponding to a positive electrode tab). Accordingly, the current flowing into the secondary battery through the current applying part may be uniformly transmitted to the positive electrode active material layer through the conductive layer as well as the positive electrode collector.

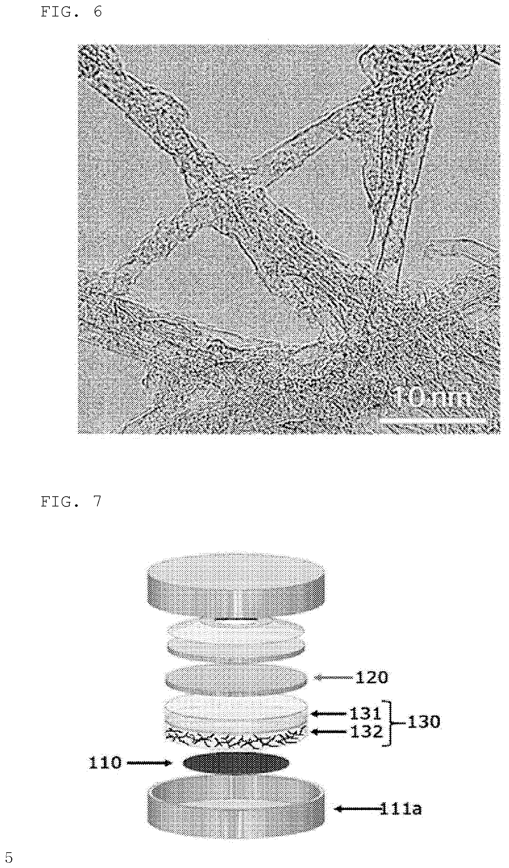

Referring to FIG. 7, when preparing a coin cell, a separator 130 including a porous substrate 131 and a conductive layer 132 is disposed between a negative electrode 120 and a positive electrode 110 so that the conductive layer 132 of the separator 130 comes into contact with an upper surface of the positive electrode 110. Also, a lower cap 111a is disposed to be in contact with a lower surface of the positive electrode 110, and a portion of the lower cap 111a comes into contact with the conductive layer 132 in an assembly process of the coin cell. Thus, a current applied through the lower cap 111a, which is a current applying part, not only evenly spreads to the lower surface of the positive electrode 110 along the lower cap 111a, but may also evenly spread to the upper surface of the positive electrode 110 along the conductive layer 132. Accordingly, battery resistance may be reduced, and input/output characteristics of the battery may be significantly improved.

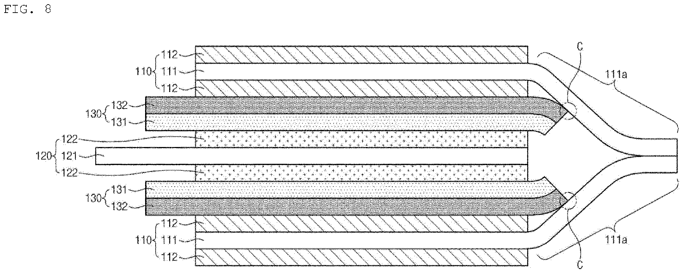

A mono-cell will be described below. Referring to FIG. 8, a positive electrode 110 including a positive electrode collector 111 and a positive electrode active material layer 112, a negative electrode 120 including a negative electrode collector 121 and a negative electrode active material layer 122, and a separator 130 including a porous substrate 131 and a conductive layer 132 are included in the mono-cell, and an end portion of the positive electrode collector 111, in a state in which the positive electrode active material layer 112 is not disposed on a surface thereof, protrudes long to constitute a positive electrode tab 111a, which is a current applying part, and the positive electrode tabs 111a are in contact with each other. In this case, a portion of the conductive layer 132 comes into contact (C) with a portion of the positive electrode tab 111a. Thus, since a current applied through the positive electrode tab 111a not only flows to the positive electrode collector 111, but also flows to the conductive layer 132, the current may flow evenly in the positive electrode active material layer 112. Accordingly, battery resistance may be reduced, and input/output characteristics of the battery may be significantly improved.

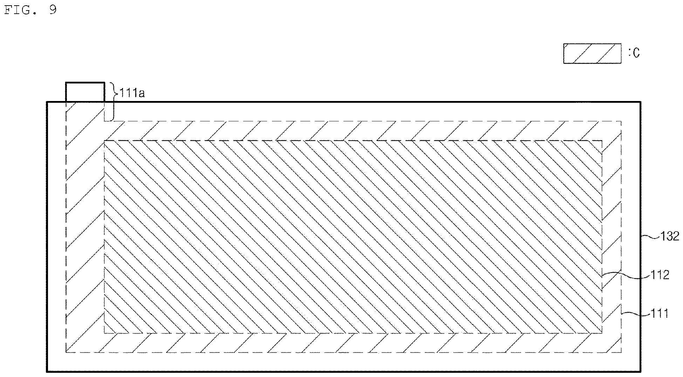

FIG. 9 is a schematic diagram illustrating a positional relationship between a positive electrode collector 111, a positive electrode active material layer 112, a positive electrode tab 111a, and a conductive layer 132 of a separator in a jelly-roll type battery in a state of an unrolled battery before the jelly-roll type battery is completed. The positive electrode collector 111 includes an uncoated portion that does not overlap the positive electrode active material layer, and the uncoated portion and a portion of the positive electrode tab 111a come into contact with the conductive layer 132 (a region corresponding to C). Thus, since a current applied through the positive electrode tab 111a not only flows to the positive electrode collector 111, but also flows to the conductive layer 132, the current may flow evenly in the positive electrode active material layer 112. Accordingly, battery resistance may be reduced, and input/output characteristics of the battery may be significantly improved.

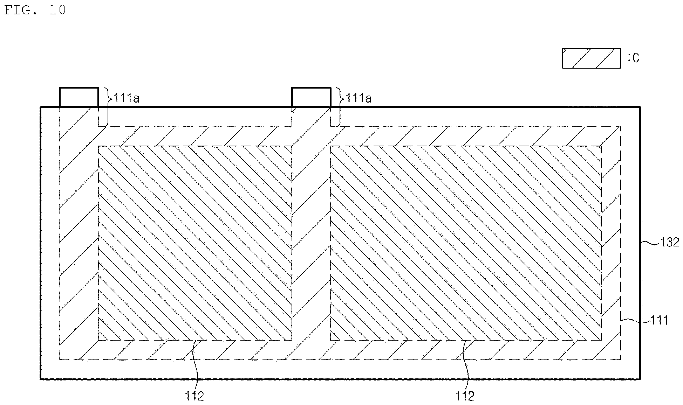

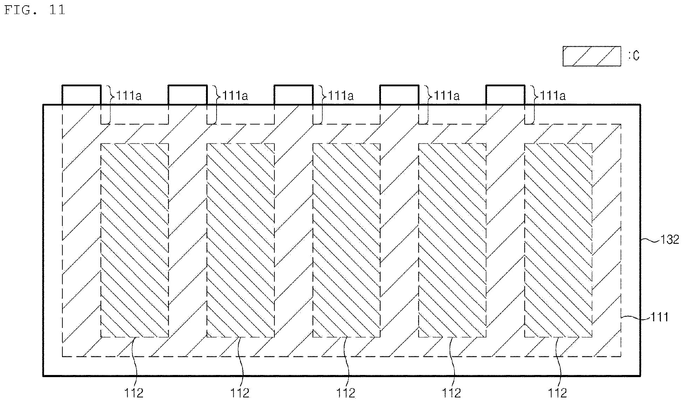

Referring to FIGS. 10 and 11, although similar to FIG. 9, it may be understood that a plurality of positive electrode tabs 111a are present, and a plurality of positive electrode active material layers 112 are also present in spaced apart regions. In this case, since a region of the positive electrode tab 111a and a region of the uncoated portion, which are in contact with the conductive layer, are increased, a current applied through the plurality of positive electrode tabs 111a more uniformly flows into the conductive layer 132, and thus, the current may flow more evenly in the positive electrode active material layer 112. Accordingly, battery resistance may be further reduced, and input/output characteristics of the battery may be significantly improved.

In FIGS. 7 to 11 described above, positions of the positive electrode and the negative electrode may be changed with each other.

The secondary battery may further include an electrolyte. The electrolyte may include an organic liquid electrolyte, an inorganic liquid electrolyte, a solid polymer electrolyte, a gel-type polymer electrolyte, a solid inorganic electrolyte, or a molten-type inorganic electrolyte which may be used in the preparation of the lithium secondary battery, but the present invention is not limited thereto.

Specifically, the electrolyte may include a non-aqueous organic solvent and a metal salt.

As the non-aqueous organic solvent, for example, an aprotic solvent, such as N-methyl-2-pyrrolidone, propylene carbonate, ethylene carbonate, butylene carbonate, dimethyl carbonate, diethyl carbonate, γ-butyrolactone, 1,2-dimethoxy ethane, tetrahydroxy franc, 2-methyl tetrahydrofuran, dimethyl sulfoxide, 1,3-dioxolane, formamide, diemthylformamide, dioxolane, acetonitrile, nitromethane, methyl formate, methyl acetate, phosphate triester, trimethoxy methane, a dioxolane derivative, sulfolane, methyl sulfolane, 1,3-dimethyl-2-imidazolidinone, a propylene carbonate derivative, a tetrahydrofuran derivative, ether, methyl propionate, and ethyl propionate, may be used.

Particularly, among the carbonate-based organic solvents, since ethylene carbonate and propylene carbonate, as cyclic carbonate, well dissociate a lithium salt due to high permittivity as a highly viscous organic solvent, the cyclic carbonate may be preferably used. Since an electrolyte having high electrical conductivity may be prepared when the above cyclic carbonate is mixed with low viscosity, low permittivity linear carbonate, such as dimethyl carbonate and diethyl carbonate, in an appropriate ratio and used, the cyclic carbonate may be more preferably used.

A lithium salt may be used as the metal salt, and the lithium salt is a material that is readily soluble in the non-aqueous organic solvent, wherein, for example, at least one selected from the group consisting of F⁻, Cl⁻, I⁻, NO₃⁻, N(CN)₂⁻, BF₄⁻, ClO₄⁻, PF₆⁻, (CF₃)₂PF₄⁻, (CF₃)₃PF₃⁻, (CF₃)₄PF₂⁻, (CF₃)₅PF⁻, (CF₃)₆P⁻, CF₃SO₃⁻, CF₃CF₂SO₃⁻, (CF₃SO₂)₂N⁻, (FSO₂)₂N⁻, CF₃CF₂(CF₃)₂CO⁻, (CF₃SO₂)₂CH⁻, (SF₅)₃C⁻, (CF₃SO₂)₃C⁻, CF₃(CF₂)₇SO₃⁻, CF₃CO₂⁻, CH₃CO₂⁻, SCN⁻, and (CF₃CF₂SO₂)₂N⁻ may be used as an anion of the lithium salt.

In order to improve life characteristics of the battery, suppress the reduction in battery capacity, and improve discharge capacity of the battery, at least one additive, for example, a halo-alkylene carbonate-based compound such as difluoroethylene carbonate, pyridine, triethylphosphite, triethanolamine, cyclic ether, ethylenediamine, n-glyme, hexaphosphoric triamide, a nitrobenzene derivative, sulfur, a quinone imine dye, N-substituted oxazolidinone, N,N-substituted imidazolidine, ethylene glycol dialkyl ether, an ammonium salt, pyrrole, 2-methoxy ethanol, or aluminum trichloride, may be further added to the electrolyte in addition to the electrolyte components.

According to another embodiment of the present invention, a battery module including the secondary battery as a unit cell and a battery pack including the battery module are provided. Since the battery module and the battery pack include the secondary battery having high capacity, high rate capability, and high cycle characteristics, the battery module and the battery pack may be used as a power source of a medium and large sized device selected from the group consisting of an electric vehicle, a hybrid electric vehicle, a plug-in hybrid electric vehicle, and a power storage system.

Hereinafter, preferred examples are presented in order to help better understanding of the present invention, but the following examples are merely presented to exemplify the present invention, it will be apparent to those skilled in the art that various modifications and alterations are possible within the scope and technical spirit of the present invention, and such modifications and alterations fall within the scope of claims included herein.

### Preparation Example 1: Preparation of Carbon Nanotube Structure Dispersion

0.4 part by weight of bundle type carbon nanotubes (specific surface area of 650 m²/g) composed of single-walled carbon nanotube units having an average diameter of 1.5 nm and an average length of 5 um or more and 0.6 part by weight of carboxymethyl cellulose (weight-average molecular weight: 400,000 g/mol, degree of substitution: 1.0) were mixed in 99.0 parts by weight of water, as a dispersion medium, to prepare a mixture such that a solid content was 1.0 wt%.

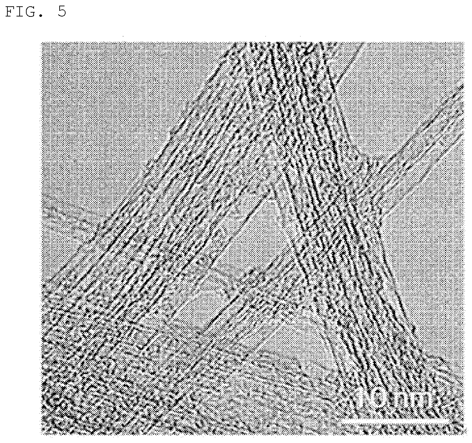

The bundle type single-walled carbon nanotubes were dispersed in the solvent by stirring the mixture by a bead-mill method and thus, a carbon nanotube structure dispersion was prepared. In this case, beads had a diameter of 1 mm, a rotational speed of a stirring vessel containing the beads was 3,000 RPM, and the stirring was performed for 60 minutes. The carbon nanotube structure dispersion included a carbon nanotube structure in the form in which 2 to 5,000 single-walled carbon nanotube units were bonded side by side (see FIG. 5). In the carbon nanotube structure dispersion, an amount of the carbon nanotube structure was 0.4 wt%, and an amount of the carboxymethyl cellulose was 0.6 wt%.

### Preparation Example 2: Preparation of Single-walled Carbon Nanotube Unit Dispersion

0.2 part by weight of bundle type carbon nanotubes (specific surface area of 650 m²/g) composed of single-walled carbon nanotube units having an average diameter of 1.5 nm and an average length of 5 um or more and 1.2 parts by weight of carboxymethyl cellulose (weight-average molecular weight: 100,000 g/mol, degree of substitution: 1.0) were mixed in 98.6 parts by weight of water, as a dispersion medium, to prepare a mixture such that a solid content was 1.4 wt%.

The bundle type single-walled carbon nanotubes were dispersed in the solvent by stirring the mixture by a bead-mill method and thus, a conductive agent dispersion was prepared. In this case, beads had a diameter of 1 mm, a rotational speed of a stirring vessel containing the beads was 3,000 RPM, and stirring for 60 minutes under the above conditions was set as one cycle and total 4 cycles (natural cooling was performed for 60 minutes between each cycle) were performed. Accordingly, a single-walled carbon nanotube unit dispersion was prepared. In the dispersion, since the bundle-type single-walled carbon nanotubes were completely dispersed, the single-walled carbon nanotube unit only existed as a single-strand unit, but the above-described carbon nanotube structure was not detected (see FIG. 6). Also, in the single-walled carbon nanotube unit dispersion, an amount of the single-walled carbon nanotube unit was 0.2 wt%, and an amount of the carboxymethyl cellulose was 1.2 wt%.

### Examples and Comparative Examples

### Example 1: Preparation of Separator and Secondary Battery

### (1) Preparation of Separator

Acetone and a PVDF-HFP binder (weight-average molecular weight: 300,000 g/mol) were mixed to prepare a polymer solution (solid content of 5 wt% concentration). Al₂O₃ (Nippon Light Metal Company, Ltd., LS235) was added to the polymer solution in an amount of 20 wt% based on a total amount of the polymer solution and then dispersed by a ball mill method to prepare a slurry for an inorganic porous coating layer. The slurry was coated on a porous substrate (Toray Industries, Inc. B12PA1, thickness 12 um) by a dip coating method, and humidified phase separation was induced at a relative humidity (RH) of about 40%. A separator including an inorganic coating layer was prepared by such a method. The carbon nanotube structure dispersion of Preparation Example 1 was surface coated on the separator prepared by the above method to have a thickness of 500 nm based on a cross section by a doctor blade coating method, and dried in an oven at 120°C for 1 minute to prepare a separator.

Li[Ni_{0.6}Mn_{0.2}Co_{0.2}]O₂ was used as a positive electrode active material. The positive electrode active material, carbon black as a conductive agent, and polyvinylidene fluoride (PVdF), as a binder, were mixed in an N-methyl-2-pyrrolidone solvent at weight ratio of 94:4:2 to prepare a positive electrode slurry.

The prepared slurry was applied to a 15 um thick positive electrode collector (Al) at a loading amount of 5 mAh/cm² and dried. In this case, a temperature of circulating air was 110°C. Subsequently, the positive electrode collector was rolled and dried in a vacuum oven at 130°C for 2 hours to form a positive electrode active material layer.

Artificial graphite as a negative electrode active material, carbon black as a negative electrode conductive agent, a styrene-butadiene rubber (SBR) as a negative electrode binder, and carboxymethyl cellulose (CMC) were mixed in distilled water at a weight ratio of 96.1:0.5:2.3:1.1 to prepare a negative electrode slurry. A 20 um thick negative electrode collector (Cu) was coated with the prepared slurry so that a loading amount was 6 mAh/cm² and dried. Thereafter, the negative electrode collector on which the negative electrode slurry was disposed was rolled by a roll rolling method such that a total thickness of the negative electrode slurry and the negative electrode collector was 80 um. Thereafter, the negative electrode slurry and the negative electrode collector were dried at 110°C for 6 hours to prepare a negative electrode.

Thereafter, after a mono-cell was prepared by combining the above-prepared positive electrode and negative electrode with each of the separators of the examples and the comparative examples disposed therebetween, an electrolyte solution (ethylene carbonate (EC)/ethylmethyl carbonate (EMC) = 1/2 (volume ratio)), lithium hexafluorophosphate (1 M LiPF₆)) was injected into the mono-cell to finally prepare a lithium secondary battery. A portion of a conductive layer in the separator and a portion of a positive electrode tab, which was an end of the positive electrode collector of the positive electrode, were in contact with each other.

### Example 2: Preparation of Separator and Secondary Battery

A separator and a battery were prepared in the same manner as in Example 1 except that a thickness of a conductive layer was 250 nm.

### Example 3: Preparation of Separator and Secondary Battery

A separator and a battery were prepared in the same manner as in Example 1 except that a loading amount of a positive electrode was 2.5 mAh/cm².

### Example 4: Preparation of Separator and Secondary Battery

A separator and a battery were prepared in the same manner as in Example 1 except that a thickness of a conductive layer was 250 nm and a loading amount of a positive electrode was 2.5 mAh/cm².

### Comparative Example 1: Preparation of Separator and Secondary Battery

A separator and a battery were prepared in the same manner as in Example 1 except that a conductive layer was not formed.

### Comparative Example 2: Preparation of Separator and Secondary Battery

A separator and a battery were prepared in the same manner as in Example 3 except that a conductive layer was not formed.

### Comparative Example 3: Preparation of Separator and Secondary Battery

A separator and a battery were prepared in the same manner as in Example 1 except that the single-walled carbon nanotube unit dispersion of Preparation Example 2 was used instead of the carbon nanotube structure dispersion of Preparation Example 1.

### Comparative Example 4: Preparation of Separator and Secondary Battery

A separator and a battery were prepared in the same manner as in Example 2 except that the single-walled carbon nanotube unit dispersion of Preparation Example 2 was used instead of the carbon nanotube structure dispersion of Preparation Example 1.

### Comparative Example 5: Preparation of Separator and Secondary Battery

A separator and a battery were prepared in the same manner as in Example 3 except that the single-walled carbon nanotube unit dispersion of Preparation Example 2 was used instead of the carbon nanotube structure dispersion of Preparation Example 1.

### Comparative Example 6: Preparation of Separator and Secondary Battery

A separator and a battery were prepared in the same manner as in Example 4 except that the single-walled carbon nanotube unit dispersion of Preparation Example 2 was used instead of the carbon nanotube structure dispersion of Preparation Example 1.

**[Table 1]**

| | Positive electrode active material layer | Conductive layer | | |
|---|---|---|---|---|
| | Loading amount (mAh/cm²) | Thickness (nm) | Carbon nanotube structure | Single-walled carbon nanotube unit |
| Example 1 | 5 | 500 | O | X |
| Example 2 | 5 | 250 | O | X |
| Example 3 | 2.5 | 500 | O | X |
| Example 4 | 2.5 | 250 | O | X |
| Comparative Example 1 | 5 | - | - | - |
| Comparative Example 2 | 2.5 | - | - | - |
| Comparative Example 3 | 5 | 500 | X | O |
| Comparative Example 4 | 5 | 250 | X | O |
| Comparative Example 5 | 2.5 | 500 | X | O |
| Comparative Example 6 | 2.5 | 250 | X | O |

In Examples 1 to 4, an average diameter of the carbon nanotube structure was 100 nm, and an average length thereof was 15.6 um. The average diameter and average length corresponded to an average value of diameters and lengths of the top 100 carbon nanotube structures with larger diameters (or lengths) and the bottom 100 carbon nanotube structures with smaller diameters (or lengths) when the prepared negative electrode was observed by a TEM. In Comparative Examples 2 and 4, an average diameter of the single-walled carbon nanotube unit was 1.6 nm, and an average length thereof was 1.8 um. The average diameter and average length corresponded to an average value of diameters and lengths of top 100 single-walled carbon nanotube units with a larger diameter (or length) and bottom 100 single-walled carbon nanotube units with a smaller diameter (or length) when the prepared negative electrode was observed by a TEM.

### Experimental Example 1: Observation of the Separators

The separators of Example 1 and Comparative Example 2 were observed by an SEM.

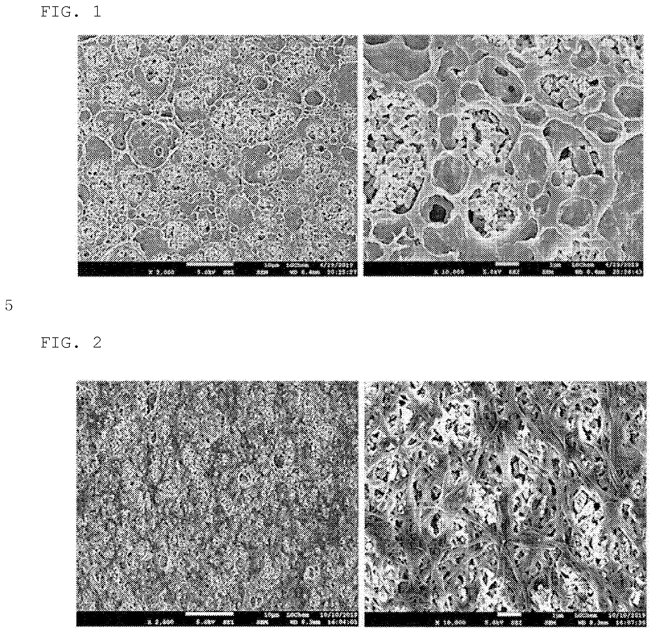

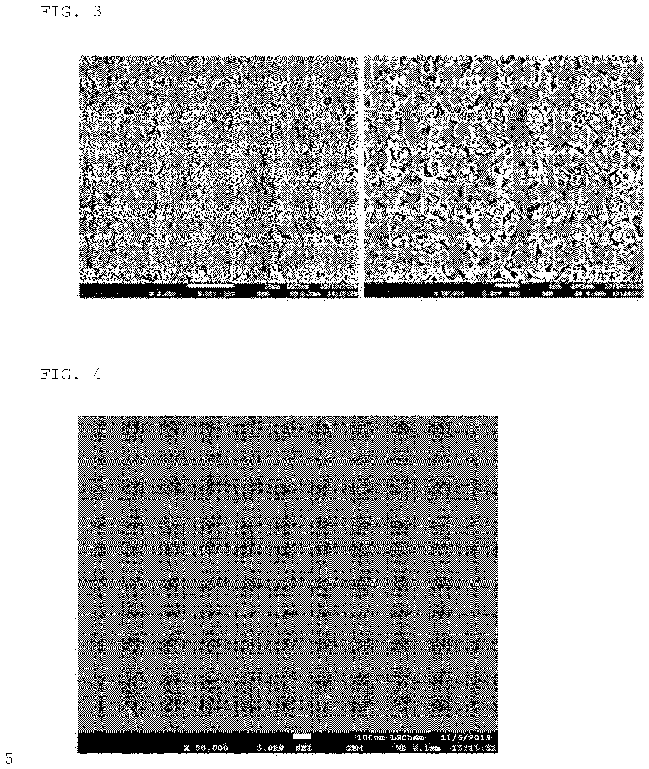

FIG. 1 is SEM images of the separator of Comparative Example 1, FIG. 2 is SEM images of the separator of Example 1, FIG. 3 is SEM images of the separator of Example 2, and FIG. 4 is an SEM image of the separator of Comparative Example 3.

Referring to FIGS. 2 and 3, carbon nanotube structures in the form of a thick rope (form in which 2 to 5,000 single-walled carbon nanotube units are bonded to each other side by side) were disposed on a surface of an inorganic coating layer while forming a network, and the carbon nanotube structures constitute a uniformly entangled net structure without blocking a pore structure on the surface of the inorganic coating layer. Also, carboxymethyl cellulose was disposed on the carbon nanotube structure. In contrast, referring to FIG. 4, a thick and long carbon nanotube structure was not observed, and a thin and short single-walled carbon nanotube unit was present as a single strand unit. Thus, if the same amount was used, the number of the single-walled carbon nanotube units relative to the number of the carbon nanotube structures would increase exponentially, and, in this case, since the single-walled carbon nanotube units were dense with each other to such an extent that the pore structure of the surface was completely blocked, the single-walled carbon nanotube units were not only disposed in pores, but also disposed while coating the inorganic layer in the form of a kind of surface layer without a gap.

### Experimental Example 2: Evaluation of Air Permeability of the Separator

Air permeability was evaluated for the separators prepared in Examples 1 to 4 and Comparative Examples 1 to 6 as follows.

Time (sec) taken for 100 ml of air to permeate through the separator at a constant pressure (0.05 MPa) was measured with an air permeability tester (manufacturer: Asahi Seiko, product name: EG01-55-1MR). An average was calculated by measuring a total of 3 points including 1 point each on the left/middle/right side of each separator, and the results thereof are presented in Table 2. If the air permeability is 500 s/100cc or more, it may cause a decrease in battery output and a degradation in cycle characteristics.

### Experimental Example 3: Evaluation of Surface Resistance of the Conductive Layer of the Separator

Surface resistance of the conductive layer was evaluated for the separators prepared in Examples 1 to 4 and Comparative Examples 1 to 6 as follows.

The surface resistance of the conductive layer of the separator was measured using a surface resistance meter (manufacturer: Mitsubishi, product name: MCP-T610) equipped with a 4-pin probe. An average was calculated by measuring 1 point each on the left/middle/right side (total of 3 points) of each separator, and the results thereof are presented in Table 2.

### Experimental Example 4: Evaluation of Discharge Capacity According to C-Rate

Output characteristics were evaluated for the batteries of Examples 1 to 4 and Comparative Examples 1 to 6 as follows.

A charge C-rate was fixed at 0.2 C, and after, 2.0 C discharge capacity ratio (%) relative to 0.2 C discharge capacity was measured for each lithium secondary battery while a discharge C-rate was increased from 0.2 C to 2.0 C, and the results thereof are presented in Table 2.

**[Table 2]**

| | Air permeability (sec(s)/100cc) | Surface resistance of conductive layer (Ω/□) | 2.0C discharge capacity ratio (%) |
|---|---|---|---|
| Example 1 | 192 | 6.81×10² | 85.5 |
| Example 2 | 186 | 6.98×10³ | 76.7 |
| Example 3 | 192 | 6.81×10² | 93.4 |
| Example 4 | 186 | 6.98×10³ | 86.9 |
| Comparative Example 1 | 191 | ∞ | 43.1 |
| Comparative Example 2 | 191 | ∞ | 68.2 |
| Comparative Example 3 | 807 | 4.62×10⁰ | 51.6 |
| Comparative Example 4 | 654 | 5.31×10¹ | 57.3 |
| Comparative Example 5 | 807 | 4.62×10⁰ | 69.8 |
| Comparative Example 6 | 654 | 5.31×10¹ | 74.5 |

## Claims

1. A separator comprising a porous substrate and a conductive layer disposed on the porous substrate,
wherein the conductive layer comprises a carbon nanotube structure in which a plurality of single-walled carbon nanotube units are bonded to each other side by side, and
wherein the carbon nanotube structure has an average diameter of 2 nm to 500 nm.

2. The separator of claim 1, wherein the carbon nanotube structures are interconnected in the conductive layer to form a network structure.

3. The separator of claim 1, wherein the carbon nanotube structure has an average length of 1 um to 500 µm.

4. The separator of claim 1, wherein the conductive layer has a thickness of 10 nm to 2,000 nm.

5. The separator of claim 1, wherein the conductive layer has a surface resistance of 5×10⁻¹ Ω/□ to 5×10⁴ Ω/□.

6. The separator of claim 1, wherein the conductive layer further comprises an additive covering at least a portion of a surface of the carbon nanotube structure.

7. The separator of claim 6, wherein the additive comprises a carboxymethyl cellulose.

8. The separator of claim 1, wherein air permeability is in a range of 50 s/100cc to 500 s/100cc.

9. The separator of claim 1, further comprising an inorganic coating layer comprising inorganic particles between the porous substrate and the conductive layer.

10. The separator of claim 1, wherein the conductive layer is disposed on one surface of the porous substrate.

11. A secondary battery comprising an electrode and the separator of claim 1.

12. The secondary battery of claim 11, wherein the electrode comprises a positive electrode and a negative electrode,
wherein the separator is disposed between the positive electrode and the negative electrode,
wherein the positive electrode comprises a positive electrode collector and a positive electrode active material layer,
wherein the positive electrode collector comprises an uncoated portion that does not overlap the positive electrode active material layer,
wherein the uncoated portion comprises a current applying part corresponding to an end region of the uncoated portion, and
wherein the conductive layer is in contact with the current applying part.

## Patentansprüche

1. Separator, umfassend ein poröses Substrat und eine auf dem porösen Substrat angeordnete leitfähige Schicht,
worin die leitfähige Schicht eine Kohlenstoff-Nanoröhrchenstruktur umfasst, worin eine Vielzahl von einwandigen Kohlenstoff-Nanoröhrcheneinheiten Seite an Seite miteinander verbunden sind, und
worin die Kohlenstoff-Nanoröhrchenstruktur einen mittleren Durchmesser von 2 nm bis 500 nm aufweist.

2. Separator gemäß Anspruch 1, worin die Kohlenstoff-Nanoröhrchenstrukturen in der leitfähigen Schicht miteinander verbunden sind, um eine Netzwerkstruktur zu bilden.

3. Separator gemäß Anspruch 1, worin die Kohlenstoff-Nanoröhrchenstruktur eine mittlere Länge von 1 µm bis 500 µm aufweist.

4. Separator gemäß Anspruch 1, worin die leitfähige Schicht eine Dicke von 10 nm bis 2.000 nm aufweist.

5. Separator gemäß Anspruch 1, worin die leitfähige Schicht einen Oberflächenwiderstand von 5×10⁻¹ Ω/□ bis 5×10⁴ Ω/□ aufweist.

6. Separator gemäß Anspruch 1, worin die leitfähige Schicht ferner ein Additiv umfasst, das zumindest einen Teil einer Oberfläche der Kohlenstoff-Nanoröhrchenstruktur bedeckt.

7. Separator gemäß Anspruch 6, worin das Additiv eine Carboxymethylcellulose umfasst.

8. Separator gemäß Anspruch 1, worin die
Luftdurchlässigkeit im Bereich von 50 s/100 cc bis 500 s/100 cc liegt.

9. Separator gemäß Anspruch 1, ferner umfassend eine anorganische Beschichtungsschicht, die anorganische Partikel umfasst, zwischen dem porösen Substrat und der leitfähigen Schicht.

10. Separator gemäß Anspruch 1, worin die leitfähige Schicht auf einer Oberfläche des porösen Substrats angeordnet ist.

11. Sekundärbatterie, umfassend eine Elektrode und den Separator gemäß Anspruch 1.

12. Sekundärbatterie gemäß Anspruch 11, worin die Elektrode eine positive Elektrode und eine negative Elektrode umfasst,
worin der Separator zwischen der positiven Elektrode und der negativen Elektrode angeordnet ist,
worin die positive Elektrode einen Positivelektroden-Stromabnehmer und eine Positivelektroden-Aktivmaterialschicht umfasst,
worin der Positivelektroden-Stromabnehmer einen unbeschichteten Bereich aufweist, der nicht mit der Positivelektroden-Aktivmaterialschicht überlappt,
worin der unbeschichtete Bereich einen stromanlegenden Teil, der einem Endbereich des unbeschichteten Bereichs entspricht, umfasst, und
worin die leitfähige Schicht in Kontakt mit dem stromanlegenden Teil ist.

## Revendications

1. Séparateur comprenant un substrat poreux et une couche conductrice disposée sur le substrat poreux,
dans lequel la couche conductrice comprend une structure de nanotubes de carbone dans laquelle une pluralité d'unités de nanotubes de carbone à paroi unique sont liées les unes aux autres côte à côte, et
dans lequel la structure de nanotubes de carbone présente un diamètre moyen de 2 nm à 500 nm.

2. Séparateur selon la revendication 1, dans lequel les structures de nanotubes de carbone sont interconnectées dans la couche conductrice pour former une structure réticulée.

3. Séparateur selon la revendication 1, dans lequel la structure de nanotubes de carbone présente une longueur moyenne de 1 µm à 500 µm.

4. Séparateur selon la revendication 1, dans lequel la couche conductrice présente une épaisseur de 10 nm à 2 000 nm.

5. Séparateur selon la revendication 1, dans lequel la couche conductrice présente une résistance de surface de 5×10⁻¹ Ω/□ à 5×10⁴ Ω/□.

6. Séparateur selon la revendication 1, dans lequel la couche conductrice comprend en outre un additif recouvrant au moins une portion d'une surface de la structure de nanotubes de carbone.

7. Séparateur selon la revendication 6, dans lequel l'additif comprend une carboxyméthylcellulose.

8. Séparateur selon la revendication 1, dans lequel la perméabilité à l'air est dans une plage de 50 s/100 cm³ à 500 s/100 cm³.

9. Séparateur selon la revendication 1, comprenant en outre une couche de revêtement inorganique comprenant des particules inorganiques entre le substrat poreux et la couche conductrice.

10. Séparateur selon la revendication 1, dans lequel la couche conductrice est disposée sur une surface du substrat poreux.

11. Batterie secondaire comprenant une électrode et le séparateur selon la revendication 1.

12. Batterie secondaire selon la revendication 11, dans laquelle l'électrode comprend une électrode positive et une électrode négative,
dans laquelle le séparateur est disposé entre l'électrode positive et l'électrode négative,
dans laquelle l'électrode positive comprend un collecteur d'électrode positive et une couche de matériau actif d'électrode positive,
dans laquelle le collecteur d'électrode positive comprend une portion non revêtue qui ne chevauche pas la couche de matériau actif d'électrode positive,
dans laquelle la portion non revêtue comprend une partie d'application de courant correspondant à une région d'extrémité de la portion non revêtue, et
dans laquelle la couche conductrice est en contact avec la partie d'application de courant.
